# EUROPEAN PATENT SPECIFICATION

(11) **EP 2 562 978 B1**
(45) Date of publication and mention of the grant of the patent: **08.10.2014**
(21) Application number: 11177478.2
(22) Date of filing: 12.08.2011
(51) Int. Cl.: H04L 12/741, H04L 12/743

(54) **Content router of a content centric network**
Inhaltsrouter eines inhaltzentrierten Netzwerks
Routeur de contenu doté d'un réseau axé sur le contenu

(43) Date of publication of application: 27.02.2013
(73) Proprietor: ALCATEL LUCENT, 92100 Boulogne-Billancourt (FR)
(72) Inventor: Perino, Diego, 91620 NOZAY (FR); Varvello, Matteo, HOLMDEL, NJ New Jersey 07733 (US)
(74) Representative: Sciaux, Edmond

(56) References cited:
- Zhang et al.: "Named Data Networking Project NDN-0001", Named Data Networking Project , 31 October 2010 (2010-10-31), XP002660910, Retrieved from the Internet: URL:http://www.named-data.net/ndn-proj.pdf [retrieved on 2011-10-10]
- Jacobson et al.: "Networking Named Content", Networking Named Content, CoNext'09 ACM , 4 December 2009 (2009-12-04), XP002660911, CoNext'09 ACM Rome Italy Retrieved from the Internet: URL:http://conferences.sigcomm.org/co-next /2009/papers/Jacobson.pdf [retrieved on 2011-10-10]
- G. Carofiglio, V. Gehlen, D. Perino: "Experimental evaluation of storage management in Content-Centric Networking,", Proc. of in Next Generation Networking and Internet symposium, Proc. of in Next Generation Networking and Internet symposium, IEEE ICC 2011, Kyoto, Japan, 9 June 2011 (2011-06-09), XP002660942, Kyoto Japan Retrieved from the Internet: URL:http://anr-connect.org/web_documents/d iff_proto.pdf [retrieved on 2011-10-11]

## Description

### FIELD OF THE INVENTION

The present invention relates to a content router. The content router according to the invention finds a particular application none-limitative in a Content Centric Network.

### BACKGROUND AND RELATED ART

Recently, an explosion of internet traffic associated with content production and dissemination is occurred, this explosion of traffic is mostly generated by popular applications. Content centric networking has recently emerged as new communication model to better deal with this trend. Popular content centric networking approaches such as TRIAD, ROFL, DONA, and NDN do not describe how today's technology should be employed for the design of a content router i.e. a node of a content centric network. Such content centric networking is presented in the following document: "Zhang et al, Named Data Networking Project NDN-0001." In all cases, it is unclear whether the deployment of a content router is feasible.

### THE INVENTION:

The object of the invention is therefore to design a content router for a content centric network based on the NDN approach.

To this end, the invention relates to a content router of content centric network comprising a plurality of modules:
- a content store comprising:
   ∘ a packet store containing Data packets, where every Data packet is inserted in the location corresponding to the hash value of the Data packet name modulo the number of bins, i.e. number of elements that can be stored in the packet store,
   ∘ an index table for keeping track of Data packets stored in said packet store, where every index entry contains a part (H-bit) of the hash value of the Data packet name, and the index entry is inserted in the location corresponding to the hash value of the

Data packet name modulo the number of bins, i.e. the index table is addressed as the packet store,
- a pending interest table for keeping track of Interest packets that have been forwarded to another node, an entry of said pending interest table corresponding to:
   ∘ a part (H-bit) of the hash value of the Interest packet name, and
   ∘ at least one interface source of the Interest packet, the location of every entry in the pending interest table being computed as the hash value of the Interest packet name modulo the number of elements the table can contain,
- a forwarding information base comprising:
   ∘ a hash-table comprising the list of content prefixes (i.e. prefixes of a content name) known by the content router with the next hop information, i.e. interface(s) where to forward an Interest packet,
      - every hash-table entry contains a part (H-bit) of the hash value of the content prefix plus next hop information,
      - every hash-table entry is inserted in the location corresponding to the hash value of the content prefix modulo the number of elements the table can store,
   ∘ bloom filters programmed with prefixes contained in the hash-table. Bloom filters are then queried in order to determine which prefix length of Interest packet name should be checked in said hash-table.

It permits to overcome the drawback of the aforementioned content centric network according to the prior art.

It is to be noted that a content router is a router implementing CCN (for Content Centric Networking) functionalities, i.e. forwarding based on packet names and packet level caching, according to the NDN proposal.

In addition to the main features aforementioned in the previous paragraph, the content router of content centric network according to the invention may also have one or more of the additional features below, taken individually or in any technically feasible combination.

In a none-limitative embodiment, each entry of content store index table further comprises additional bytes (e.g. four) to specify the location, i.e. memory address, of the Data packet in the packet store, and the packet store is addressed as a log-structured file system.

In a further none-limitative embodiment, each entry of content store index table further comprises additional bytes (e.g. eight) for list pointers to other entries in order to implement different packet replacement policies.

In a further none-limitative embodiment, every bin of a table is adapted to receive a plurality of items. In a none-limitative embodiment, an item is a hash value and/or a packet. Accordingly, a bin of an hash-table (content store index table, forwarding information base hash-table or pending interest table) can accommodate multiple part of hash values of different packet names, and every packet store entry can contain multiple Data packets.

In a further none-limitative embodiment, every entry of a table comprises a timer, said timer allowing a bin to save at least one item (hash value and/or packet) during a determined time.

In a further none-limitative embodiment, the content router is an edge-router wherein:
- for the content store :
   ∘ the packet store is implemented on at least one Flash-based SSD,
   ∘ the index table is implemented on at least one DRAM chip,
- the pending interest table is implemented on at least one RLDRAM chip,
- for the forwarding information base:
   ∘ bloom filters are stored on-chip using SRAM memory, and
   ∘ the hash-table is implemented on at least one DRAM chip.

In a further none-limitative embodiment, the content router is a backbone router wherein:
- for the content store :
   ∘ the packet store is implemented on at least one DRAM chip,
   ∘ the index table is implemented on at least one RLDRAM chip,
- the pending interest table is implemented on at least one SRAM chip,
- for the forwarding information base:
   ∘ the bloom filters are stored on-chip using SRAM memory, and
   ∘ the hash-table is implemented on at least one RLDRAM chip.

### BRIEF DESCRIPTION OF THE DRAWINGS:

Further features and advantages of the invention will become clear upon reading the following description given by way of non-limiting indication and with reference to the accompanying drawings, in which:
- Figure 1 illustrates, in a none-limitative embodiment, a content router of a content centric network according to the invention,
- Figure 2 illustrates, in a none-limitative embodiment, a content router according to figure 1 for an edge router,
- Figure 3 illustrates, in a none-limitative embodiment, a content router according to figure 1 for a backbone router.

For reasons of clarity, only those elements beneficial for comprehension of the invention have been shown, more specifically schematically and with no regard for scale. Furthermore, like elements illustrated in different figures are denoted by like reference numerals.

### DETAILLED DESCRIPTION:

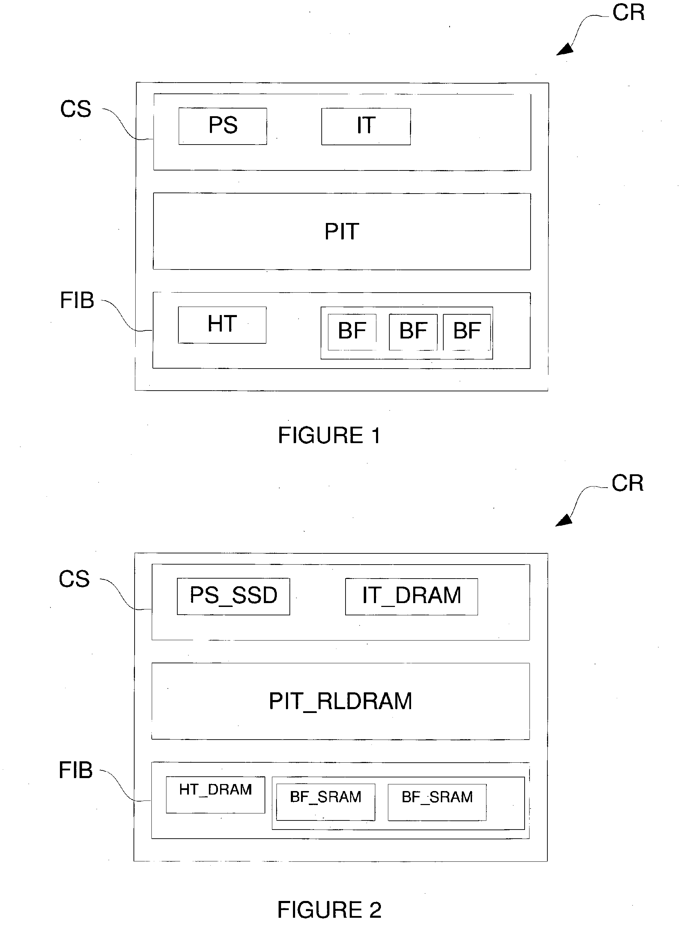

The figure 1 illustrates, in a none-limitative embodiment, a content router CR of content centric network according to the invention.

The content router CR comprises a plurality of modules.
More particularly, it comprises a content store CS (indifferently called CS) comprising:
∘ a packet store PS containing Data packets, where every Data packet is inserted in the location corresponding to the hash value of the Data packet name modulo the number of bins, i.e. number of elements that can be stored in the packet store PS,
∘ an index table IT for keeping track of Data packets stored in said packet store PS, where every index entry contains a part H-bit of the hash value of the Data packet name, and is inserted in the location corresponding to the hash value of the Data packet name modulo the number of bins, i.e. the index table IT is addressed as the packet store PS.

The content router CR comprises furthermore a pending interest table PIT (indifferently called PIT) for keeping track of Interest packets that have been forwarded to another node, an entry of said pending interest table PIT corresponding to:
∘ a part H-bit of the hash value of the Interest packet name, and
∘ at least one interface source of the Interest packet,
the location of every entry in the PIT being computed as the hash value of the Interest packet name modulo the number of elements the PIT can contain. Furthermore, the content router CR comprises a forwarding information base FIB (indifferently called FIB) comprising:
∘ a hash-table HT comprising the list of content prefixes known by the content router CR with the next hop information,
   - every hash-table entry contains a part H-bit of the hash value of the content prefix plus next hop information i.e. interface(s) where to forward the Interest packet,
   - every hash-table entry is inserted in the location corresponding to the hash value of the content prefix modulo the number of elements the hash-table can store,
∘ bloom filters BF, well-known by the man skilled in the art, programmed with prefixes contained in the hash-table. Bloom filters are then queried in order to determine which prefix length of Interest packet name should be checked in said hash-table HT.
   It is to be noted that the longer a bloom filter BF is, the lower the number of reading operations on the hash-table is, as the lower the probability of matching error is. If there are no bloom filters BF, there is a need to check all prefix lengths of the packet name starting from the full name until a match is found or the first component is reached.

In a none-limitative embodiment the Interest packet name is /france.com/media/villes/video.mpeg.
In a none-limitative embodiment, without BFs, the content router CR checks if a prefix in the hash-table HT corresponds to /france.com/media/villes/video.mpeg. If no, content router CR checks if a prefix in the hash-table HT corresponds to /france.com/media/villes. If no, the content router CR checks if a prefix in the hash-table HT corresponds to /france.com/media/. If no, content router CR checks if a prefix in the hash-table HT corresponds to /france.com/. Otherwise a default route can be used. If BFs are used, one BF per distinct prefix length in the hash-table is required. By "querying" BFs with the Interest packet name, the CR obtains a list of possible prefix lengths for which a match can be found in the hash table HT. Note that some of those matches may be false positives. The CR then checks the HT starting from the longest possible match. The use of BFs thus reduces the number of lookups required in the HT.

When a client asks for a given packet of a content, such as a video, the following steps are performed:
- the client sends to a first content router CR an Interest packet comprising the name of the desired Data packet;
- when a content router CR receives an Interest packet on a given interface :
   o it checks in its content store CS index table if the Interest packet name is present. If there is a match, the corresponding Data packet in the Content Store that matches the Interest packet will be sent to the interface source of the Interest packet.
   ∘ Otherwise, if there is no match in the CS, it looks in the PIT, and if there is a match with an entry of said PIT (i.e. said request already exists in said PIT) the source interface of the Interest packet will be added to the pending interest table PIT entry in concordance with the request previously registered for another(s) interface(s). This means a pending request for the same data has already been forwarded, and the incoming interface is simply added to the list of requesting interfaces. When said Data packet arrives, the content router CR will send it to all interfaces that requested it and will add said Data packet to its content store CS. The PIT corresponding entry is then removed.
   ∘ Otherwise, if there is no match in the PIT:
      - if there is a match with an entry of the FIB then the Interest packet is sent upstream towards another content router, and an entry in the PIT is created. Next CRs will repeat the same operations until the corresponding Data packet is found in a CS, or the original server is reached.
      - If there is no match in the FIB, the Interest packet is discarded, or it is sent to a default interface and a PIT entry is created.

In a non limitative embodiment, each entry of content store CS index table IT further comprises additional (e.g. four) bytes to specify the location, i.e. memory address, of the packet in the packet store PS, and the packet store PS is addressed as a log-structured file system. In such a log-structured CS, the Data packets are sequentially written. Sequential writing allows faster writing rate in some memory technologies e.g. SSD.

In another non limitative embodiment, each entry of content store CS index table IT further comprises some additional bytes (e.g. eight) for list pointers to other entries in order to implement different packet replacement policies such as LRU (Least Recently Used) or LFU (Least Frequently used). The implementation of replacement policies as LRU or LFU may increase the probability to find a given Data packet in the CS, thus reducing the number of packets that have to be forwarded to next content routers CRs.

In a non limitative embodiment, every bin of a table is adapted to receive a plurality of items. In a none-limitative embodiment, an item is a hash value and/or a packet. Accordingly, a bin of a hash-table (HT, PIT, or IT) can accommodate multiple H-bit of hash values for different names, and every packet store entry can contain multiple data packets. This technique allows reducing the number of collisions, i.e. hash values or Data packets to be inserted in the same bin, due to collisions of hash name values.

In a non limitative embodiment, every entry of a table comprises a timer T, said timer allowing for a bin (also called slot) to save at least one item during a determined time. It permits to delete such item after said determined time. For example, a data packet is removed from the content store when the data becomes obsolete, as it is the corresponding entry in the content store index table; a PIT entry is removed after the corresponding data packet is not received after a given amount of time e.g. in case the Data packet is lost. Note that timers associated to different entries may be different.

In a none-limitative embodiment of the invention illustrated in figure 2, the content router CR is an edge-router. In this edge router, the content functionalities FIB, CS and PIT are implemented in a single module for the whole router.

The content router illustrated in figure 2 is an edge router wherein:
- for the content store CS :
   o the packet store is implemented on at least one Flash-based SSD (illustrated PS_SSD), specifically on High Speed SSD. SSD allows to store more data than other technologies like DRAM or SRAM.
   o the index table is implemented on at least one DRAM chip (illustrated IT_DRAM).
- the pending interest table PIT is implemented on at least one RLDRAM chip (illustrated PIT_RLDRAM).
- for the forwarding information base FIB:
   ∘ the bloom filters are stored on-chip using SRAM memory (illustrated BF_SRAM): this is necessary in order to check all bloom filters in parallel, and
   ∘ the hash-table is implemented on at least one DRAM chip (illustrated HT_DRAM).

The edge content router CR according to the invention comprises, say, the FIB, CS and PIT in a single integrated module as in Figure 1.

More particularly, in a none-limitative embodiment, where the total router Interest packet rate can be 15 Mpck/s at maximum and the total router Data packet rate can be 0.417 Mpck/s at maximum, for the content store CS, packet store PS is implemented using a 1-TByte high speed SSD which can easily sustains an Data packet rate of 0.417 Mpck/s. The index table IT associated to a 1-TByte packet store has a size of 6-Gbytes; DRAM memory should be used in order to sustain an Interest rate of 15 Mpck/s.

Furthermore, for example, if we assume a Data packet is received 80 ms after its corresponding Interest packet has been forwarded on average, the pending Interest table PIT can be stored in two RLDRAM chips of 70 Mbits.

Concerning the forwarding Information base FIB, it needs to store about 20 million prefixes at the network edge. To do so, 200-Mbit SRAM is used for the on-chip FIB memory. It follows that the FIB off-chip memory requires 140 MBytes and is implemented using a single DRAM chip that can sustain the maximum speed of 15 Mpck/s.

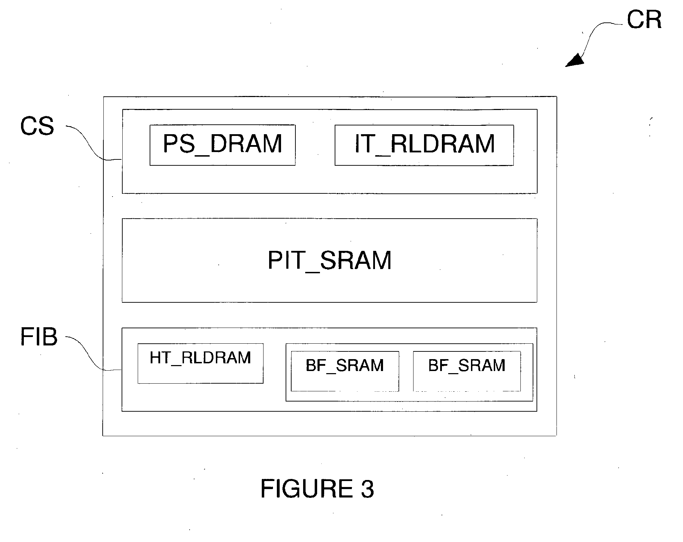

In a non limitative embodiment of the invention illustrated in figure 3, the content router CR is a backbone router. In this backbone router, the content functionalities FIB, CS and PIT are implemented in every line-card.

The content router CR illustrated in figure 3 is a backbone router wherein:
- for the content store :
   - the index table is Implemented on at least one RLDRAM chip (illustrated IT_RLDRAM),
   - the packet store is implemented on at least one DRAM chip (illustrated PS_DRAM).
- the pending interest table is implemented on at least one SRAM chip (illustrated PIT_SRAM).
- For the forwarding information base:
   - bloom filters are stored on-chip using SRAM memory (illustrated BF_SRAM). This is necessary in order to check all bloom filters BF in parallel,
   - the hash-table is implemented on at least one RLDRAM chip (illustrated HT_RLDRAM).

In a none-limitative embodiment, where the total router Interest packet rate can be 125 Mpck/s at maximum and the total router Data packet rate can be 3.33 Mpck/s at maximum, for the content store CS, packet store PS is implemented using a 10-GByte DRAM memory. A 10-GByte packet store requires an index table of 266 Mbits. The index table is duplicated in two RLDRAM chips in order to sustain 40 Gbps or 125 Mpck/s.

Furthermore, for example, if we assume a Data packet is received 80 ms after its corresponding Interest packet has been forwarded on average, the pending Interest table PIT can be stored in SRAM chips of 560 Mbits.

Concerning the forwarding information base FIB, it needs to store about 250 million prefixes at the network backbone. In order to sustain such a large routing state, we use a 4 Gbits on-chip SRAM and about 1.5 GBytes off-chip RLDRAM memory. Under this configuration, the FIB can support only a rate of about 66 Mpck/s, i.e., about the half of the peak Interest rate of 125 Mpck/s. It follows that either the content store CS and the pending interest table PIT should serve half of the incoming Interests, or the off-chip forwarding information base FIB will be duplicated.

## Claims

1. Content router, CR, of Content Centric Network comprising a plurality of modules :
- a content store, CS, comprising:
∘ a packet store, PS, containing Data packets, where every Data packet is inserted in the location corresponding to the hash value of the Data packet name modulo the number of bins, the bins being the number of elements that can be stored in the packet store, PS,
∘ an index table, IT, for keeping track of Data packets stored in said packet store, PS, where every index entry contains a part, H-bit, of the hash value of the Data packet name, and the index entry inserted in the location corresponding to the hash value of the Data packet name modulo the number of bins so that the index table is addressed as the packet store, PS,
- a pending interest table, PIT, for keeping track of Interest packets that have been forwarded to another node, an entry of said pending interest table, PIT, corresponding to:
∘ a part, H-bit, of the hash value of the Interest packet name, and
∘ at least one interface source of the Interest packet
, the location of every entry in the, PIT, being computed as the hash value of the Interest packet name modulo the number of elements the PIT can contain,
- a forwarding information base, FIB, comprising:
∘ a hash-table, HT, comprising the list of content prefixes known by the content router CR with the next hop information,
• every hash-table entry contains a part, H-bit, of the hash value of the content prefixes plus next hop information,
• every hash-table entry is inserted in the location corresponding to the hash value of the content prefix modulo the number of elements the table can store.
∘ bloom filters, BF, programmed with prefixes contained in the hash-table, HT, said bloom filters, BF, being queried in order to determine which prefix length of Interest packet name should be checked in said hash-table, HT.

2. Content router, CR, according to claim 1 wherein each entry of content store index table, IT, further comprises additional bytes to specify the location.

3. Content router, CR, according to claim 1 wherein each entry of content store index table, IT, further comprises additional bytes for list pointers to other entries in order to implement different packet replacement policies.

4. Content router, CR, according to claim 1 wherein every entry of a table is adapted to receive a plurality of items.

5. Content router, CR, according to any of the preceding claims wherein every entry of a table, IT, PIT, HT, comprises a timer, said timer allowing for a bin to save at least one hash value during a determined time.

6. Content router, CR, according to one of the preceding claims 1 to 6 wherein it is an edge-router wherein:
- for the content store, CS:
∘ the packet store is implemented on at least one Flash-based SSD, PS_SSD,
∘ the index table is implemented on at least one DRAM chip, IT_DRAM,
- the pending interest table is implemented on at least one RLDRAM PIT_RLDRAM, chip,
- for the forwarding information base, FIB:
∘ the bloom filters are implemented on-chip on-chip using SRAM memory, BF_SRAM, and
∘ the hash-table is implemented on at least one DRAM chip, HT_DRAM.

7. Content router, CR, according to any of the preceding claim 1 to 6 wherein it is a backbone router wherein:
- for the content store, CS:
∘ the packet store is implemented on at least one DRAM chip, PS_DRAM,
∘ the index table is implemented on at least one RLDRAM chip, IT_RLDRAM,
- the pending interest table is implemented on at least one SRAM chip, PIT_SRAM,
- for the forwarding information base, FIB:
∘ the bloom filters are implemented on at least one SRAM chip, BF_SRAM, and
∘ the hash-table is implemented on at least one RLDRAM chip, HT_RLDRAM.

## Patentansprüche

1. Inhaltsrouter, CR, eines inhaltzentrierten Netzwerks, eine Vielzahl von Modulen umfassend:
- Einen Inhaltsspeicher, CS, umfassend:
∘ einen Paketspeicher, PS, welcher Datenpakete enthält, wobei jedes Datenpaket an dem Speicherplatz eingefügt wird, welcher dem Hashwert des Namens des Datenpaketes modulo der Anzahl der Bins entspricht, wobei die Bins die Anzahl der Elemente, die in dem Paketspeicher, PS, gespeichert werden können, darstellen,
∘ eine Indextabelle, IT, zur Verfolgung der in dem besagten Paketspeicher, PS, gespeicherten Datenpakete, wobei jeder Indexeintrag einen Teil, H-bit, des Hashwertes des Datenpaketnamens enthält, und wobei der Indexeintrag an dem Speicherplatz eingefügt wird, welcher dem Hashwert des Namens des Datenpaketes modulo der Anzahl der Bins entspricht, so dass die Indextabelle als der Paketspeicher, PS, adressiert wird,
- eine ausstehende Interessentabelle, PIT, zur Verfolgung der interessierenden Pakete, welche an einen anderen Knoten weitergeleitet wurden, wobei die besagte ausstehende Interessentabelle, PIT, Folgendem entspricht:
∘ einem Teil, H-bit, des Hashwertes des Namens des interessierenden Paketes, und
∘ mindestens einer Schnittstellenquelle des interessierenden Paketes,
wobei der Speicherplatz eines jeden Eintrags in der PIT als der Hashwert des Namens des interessierenden Paketes modulo der Anzahl der Elemente, welche die PIT enthalten kann, berechnet wird,
- Eine Weiterleitungsinformationsbasis, FIB, umfassend:
o eine Hashtabelle, HT, mit einer Liste von dem Inhaltsrouter, CR, bekannten Inhaltspräfixen mit den Next-Hop-Informationen,
• wobei jeder Hashtabelleneintrag einen Teil, H-bit, des Hashwertes der Inhaltspräfixe plus Next-Hop-Informationen enthält,
• wobei jeder Hashtabelleneintrag an dem Speicherplatz, welcher dem Hashwert des Inhaltspräfixes modulo der Anzahl der Elemente, die in der Tabelle gespeichert werden können, eingefügt wird,
∘ Bloom-Filter, BF, welche mit in der Hashtabelle, HT, enthaltenen Präfixen programmiert werden, wobei die besagten Bloom-Filter, BF, abgefragt werden, um zu bestimmen, welche Präfixlänge des Namens des interessierenden Paketes in der besagen Hashtabelle, HT, überprüft werden soll.

2. Inhaltsrouter, CR, nach Anspruch 1, wobei jeder Eintrag der Indextabelle, IT, des Inhaltsspeichers weiterhin zusätzliche Bytes umfasst, um den Speicherplatz zu spezifizieren.

3. Inhaltsrouter, CR, nach Anspruch 1, wobei jeder Eintrag der Indextabelle, IT, des Inhaltsspeichers weiterhin zusätzliche Bytes für Listenpointer zu anderen Einträgen enthält, um unterschiedliche Paketersetzungsrichtlinien zu implementieren.

4. Inhaltsrouter, CR, nach Anspruch 1, wobei jeder Eintrag einer Tabelle für den Empfang einer Vielzahl von Items geeignet ist.

5. Inhaltsrouter, CR, nach einem beliebigen der vorstehenden Ansprüche, wobei jeder Eintrat einer Tabelle, IT, PIT, HT, einen Timer umfasst, wobei der besagte Timer das Speichern zumindest eines Hashwertes während einer vorbestimmten Zeitdauer in einer Bin ermöglicht.

6. Inhaltsrouter, CR, nach einem beliebigen der vorstehenden Ansprüche 1 bis 6, wobei es sich um einen Edge-Router handelt, wobei:
- für den Inhaltsspeicher, CS:
∘ der Paketspeicher auf mindestens einer flashbasierten SSD, PS-SSD) implementiert wird,
∘ die Indextabelle auf mindestens einem DRAM-Chip, IT_DRAM, implementiert wird,
- die ausstehende Interessentabelle auf mindestens einem RLDRAM-Chip, PIT_RLDRAM, implementiert wird,
- für die Weiterleitungsinformationsbasis, FIB:
∘ die Bloom-Filter auf dem Chip implementiert werden, wobei ein SRAM-Speicher, BF_SRAM) verwendet wird, und
∘ die Hashtabelle auf mindestens einem DRAM-Chip, HT_DRAM, implementiert wird.

7. Inhaltsrouter, CR, nach einem beliebigen der Ansprüche 1 bis 6, wobei es sich um einen Backbone-Router handelt, wobei:
- für den Inhaltsspeicher, CS:
∘ der Paketspeicher auf mindestens einem DRAM-Chip, PS_DRAM, implementiert wird,
∘ die Indextabelle auf mindestens einem RLDRAM-Chip, IT_RLDRAM, implementiert wird,
- die ausstehende Interessentabelle auf mindestens einem SRAM-Chip, PIT_SRAM, implementiert wird,
- für die Weiterleitungsinformationsbasis, FIB:
∘ die Bloom-Filter auf mindestens einem SRAM-Chip, BF_SRAM, implementiert werden, und
∘ die Hashtabelle auf mindestens einem RLDRAM-Chip, HT_RLDRAM, implementiert wird.

## Revendications

1. Routeur de contenu, CR, d'un réseau centré sur le contenu comprenant une pluralité de modules :
- une mémoire de contenu, CS, comprenant :
• une mémoire de paquets, PS, contenant des paquets de données, où chaque paquet de données est inséré dans l'emplacement correspondant à la valeur de hachage du nom de paquet de données modulo le nombre de segments, les segments étant le nombre d'éléments qui peuvent être stockés dans la mémoire de paquets, PS,
• une table d'index, IT, permettant le suivi de paquets de donnés stockés dans ladite mémoire de paquets, PS, où chaque entrée d'index contient une partie, H-bit, de la valeur de hachage du nom de paquet de données, et l'entrée d'index insérée dans l'emplacement correspondant à la valeur de hachage du nom de paquet de données modulo le nombre de segments de sorte que la table d'index soit adressée comme la mémoire de paquets, PS,
- une table d'intérêt en attente, PIT, permettant le suivi de paquets d'intérêt qui ont été transférés vers un autre noeud, une entrée de ladite table d'intérêt en attente, PIT, correspondant à :
• une partie, H-bit, de la valeur de hachage du nom de paquet d'intérêt, et
• au moins une source d'interface du paquet d'intérêt
l'emplacement de chaque entrée dans la, PIT, étant calculé comme la valeur de hachage du nom de paquet d'intérêt modulo le nombre d'éléments que la, PIT, peut contenir,
- une base d'informations de transfert, FIB, comprenant :
• une table de hachage, HT, comprenant la liste de préfixes de contenu connus du routeur de contenu, CR, avec les informations de saut suivant,
• chaque entrée de table de hachage contient une partie, H-bit, de la valeur de hachage des préfixes de contenu plus les informations de saut suivant,
• chaque entrée de table de hachage est insérée dans l'emplacement correspondant à la valeur de hachage de préfixes de contenu modulo le nombre d'éléments que la table peut stocker.
• des filtres de Bloom, BF, programmés avec des préfixes contenus dans la table de hachage, HT, lesdits filtres de Bloom, BF, étant interrogés afin de déterminer quelle longueur de préfixe du nom de paquet d'intérêt doit être vérifiée dans ladite table de hachage, HT.

2. Routeur de contenu, CR, selon la revendication 1 dans lequel chaque entrée de la table d'index, IT, de mémoire de contenu comprend en outre des octets supplémentaires pour spécifier l'emplacement.

3. Routeur de contenu, CR, selon la revendication 1 dans lequel chaque entrée de la table d'index, IT, de mémoire de contenu comprend en outre des octets supplémentaires pour des pointeurs de listes vers d'autres entrées afin de mettre en oeuvre des politiques de remplacement de paquets différentes.

4. Routeur de contenu, CR, selon la revendication 1 dans lequel chaque entrée d'une table est adaptée pour recevoir une pluralité d'éléments.

5. Routeur de contenu, CR, selon l'une quelconque des revendications précédentes dans lequel chaque entrée d'une table, IT, PIT, HT, comprend un minuteur, ledit minuteur permettant à un segment de sauvegarder au moins une valeur de hachage durant une période déterminée.

6. Routeur de contenu, CR, selon l'une des revendications précédentes 1 à 6, lequel étant un routeur de bordure dans lequel :
- pour la mémoire de contenu, CS :
• la mémoire de paquets est mise en oeuvre sur au moins un SSD Flash, PS_SSD,
• la table d'index est mise en oeuvre sur au moins une puce DRAM, IT_DRAM,
- la table d'intérêt en attente est mise en oeuvre sur au moins une puce RLDRAM, PIT_RLDRAM,
- pour la base d'informations de transfert, FIB :
• les filtres de Bloom sont mis en oeuvre sur une puce en utilisant une mémoire SRAM, BF_SRAM, et
• la table de hachage est mise en oeuvre sur au moins une puce DRAM, HT_DRAM.

7. Routeur de contenu, CR, selon l'une quelconque des revendications précédentes 1 à 6, lequel étant un routeur fédérateur dans lequel :
- pour la mémoire de contenu, CS :
• la mémoire de paquets est mise en oeuvre sur au moins une puce DRAM, PS_DRAM,
• la table d'index est mise en oeuvre sur au moins une puce RLDRAM, IT_RLDRAM,
- la table d'intérêt en attente est mise en oeuvre sur au moins une puce SRAM, PIT_SRAM,
- pour la base d'informations de transfert, FIB :
• les filtres de Bloom sont mis en oeuvre sur au moins une puce SRAM, BF_SRAM, et
• la table de hachage est mise en oeuvre sur au moins une puce RLDRAM, HT_RLDRAM.
